# EUROPEAN PATENT APPLICATION

(11) **EP 4 116 030 A1**
(43) Date of publication of application: **11.01.2023**
(21) Application number: 21184898.1
(22) Date of filing: 09.07.2021
(51) Int. Cl.: B23K 26/0622, B23K 26/06, B23K 26/082, B23K 26/352, B23K 26/402, G11B 7/0045, B23K 101/40, B23K 103/00

(54) **METHOD FOR OPTICAL WRITING IN A SEMICONDUCTOR MATERIAL, CORRESPONDING COMPUTER PROGRAM PRODUCT, STORING MEDIUM AND WRITING DEVICE**

(71) Applicant: Aix-Marseille Université, 13284 Marseille Cedex 07 (FR); Centre National de la Recherche Scientifique, 75016 Paris 16 (FR)
(72) Inventor: GROJO, David, 13012 Marseille (FR); WANG, Andong, 13009 Marseille (FR); DAS, Amlan, 13009 Marseille (FR)
(74) Representative: Vidon Brevets & Stratégie

(57) **Abstract**

The invention relates to an optical writing method in a semiconductor material (10), the method comprising laser writing in volume of the semiconductor material. The method comprises, priorto laserwriting, irradiating the semiconductor material (10) with at least one laser pre-pulse configured to change transiently and locally one property of the semiconductor material (10).

## Description

### Field of the invention

The field of the invention is that of optical writing.

More specifically, the invention relates to a new concept of optical writing for semiconductor materials.

The present invention can be applied notably, but not exclusively, in the implementation of microelectronics and its many resulting applications (for example storing devices, optical integrated circuits, photonic components, all-optical systems), quantum electronics, or microelectromechanical systems (also referred to as "MEMS").

### Technological background

This document seeks more particularly here below to describe problems existing in the field of Silicon integrated photonics. Of course, the invention is not limited to this particular field of application but is of interest for any optical writing technique in semiconductor material that has to cope with closely related or similar issues and problems.

Silicon integrated photonics, which consists in using the manufacturing processes of the microelectronics industry to produce photonics components, is considered as a high potential technology for security, high-speed communications and computing applications. This technology, which appeared as an alternative to Silicon integrated electronics, has been made possible in particular thanks to the interesting optical properties of Silicon. The use of Silicon integrated photonics has been very strongly stimulated in recent years by big application challenges: the increase in the volume of digital data broadcast throughout the world, the intensive use of the Internet network and the development of connected objects, to name a few.

By the way, the emergence of femtosecond laser sources has made it possible to develop three-dimensional ("3D") laser writing technologies in dielectric materials, in particular inscription as optical waveguides in glass for example.

By "three-dimensional writing", "3D writing" or "volume writing" it shall mean any volume writing process of a material involving not only surface structuring but also in-depth structuring of said material.

Recent works demonstrating the possibility of direct laser writing in the volume of semiconductor materials, and in particular in Silicon, have recently emerged. A direct laser writing method is for example disclosed in French patent FR3053155B1. This direct laser writing method relies on an in-depth writing of Silicon using infra-red laser pulses focused in the material. Laser writing is based on laser-induced material modifications resulting in permanent changes of the material properties, like the refractive index for example. Based on this principle, the laser radiation parameters are chosen and controlled as a function of the desired local variation of the material properties. However, due to the importance of non-linear effects linked to the absorption and propagation of intense laser light in semiconductors, this known method offers limited optical performance, especially in terms of resolution of writing. Indeed, these non-linear effects intrinsically limit laser energy deposition and degrade the laser focusing performances achievable in the material, leading to a modest controllability of laser inscriptions (with dimensions larger than theoretical optical limits) and so a writing quality which is not entirely satisfactory.

Another known method for laser writing in semiconductor has been developed based on the SOI technology (for "Silicon on Insulator"). Although SOI technology provides proper optical performance, it nevertheless has major drawbacks specific to lithography process (several sensitive steps are needed in a clean and controlled environment) and structural features (which precludes easy design of three-dimensional architectures), making this method non-optimal.

There is therefore a need to provide a high-performance optical writing technique for semiconductor materials, and in particular reaching a quality of writing appropriate for the most demanding applications. In particular micrometer 3D precision and erasable or reconfigurable induced modifications are highly desirable but has not been achieved to date. These performances are accessible with the present invention described below.

### Summary of the invention

A particular embodiment of the invention proposes a method for optical writing in a semiconductor material, the method comprising laser writing in volume of the semiconductor material. According to the invention, the method comprises, prior to said laser writing, irradiating the semiconductor material with at least one laser pre-pulse configured to change transiently and at least locally at least one property of the semiconductor material, and a predetermined time elapses between the laser pre-pulse and laser writing.

The at least one property of semiconductor material belongs to the group comprising: refractive index, birefringence, nonlinear susceptibility, luminescence, mechanical strength, chemical etching rate, electrical and thermal conductivity.

The invention therefore relies on a new concept of optical writing for semiconductors. This new concept consists in carrying out a preliminary step for pre-conditioning the semiconductor material for laser writing by changing transiently at least one property of material before the writing step. The predetermined time separating the laser writing from the laser pre-pulse is dimensioned as a function of the duration of transient change occurring within the material. The inventors of the present disclosure observed that such a preliminary step for preparing laser writing enhances optical writing performances in this family of materials, in particular in terms of resolution of writing and types of accessible modifications. More particularly, the claimed method makes it possible to improve the accuracy and controllability of the process. Such an improvement can be defined as:
- an improvement in resolution (in the order of the micron);
- access to an erasable and reconfigurable type of modification.

These features are not available without the invention.

By reconfigurable, it is meant, throughout this document, an adjustment (positive or negative) of the change of material properties accessible by the laser writing approach. For instance, for a change of the refractive index or any other material properties which depends on the number of created crystalline defects created by the laser pulses, reconfigurable modification means the ability to increase (defect accumulation) or decrease (defect relaxation) the number of defects by appropriate laser irradiations. This imposes a control on the number but also on the type of created defects that is accessible with the present invention and has not been otherwise demonstrated in silicon.

Actually, the claimed invention relates to a laser methodology for writing, as well as, as will appear below, correcting and erasing changes in three-dimensional space within semiconductors. The new principles identified (multi-pulse, multi-rate) inherently confer a very high spatial resolution to the process (micrometer level unequalled for a 3D process in semiconductors) and the ability to induce only detectable, adjustable and optically erasable structural modifications.

These new capabilities offer potential applications in microelectronics. One immediate prospect is the realisation of very high density, all-optical memories or information storage, without equivalent, in a material like silicon. Combined with chemical etching, the level of control of the method also allows the microfabrication of monolithic silicon structures with complex 3D architectures.

According to an embodiment:
- said laser writing comprises irradiating said material by means of a main laser pulse to form a laser inscription at a given point in volume of the semiconductor material;
- the at least one laser pre-pulse and the main laser pulse are configured such that:
   * the at least one laser pre-pulse is of light intensity higher than the main laser pulse;
   * the at least one laser pre-pulse is of pulse width lower than the main laser pulse;
   * the at least one laser pre-pulse and the main laser pulse are separated by said predetermined time.

The invention therefore relies on a multiple irradiation to improve writing performance. Indeed, one or more laser pre-pulses are preliminary generated for structuring at least locally the material before laser writing in order to allow a hyper-localization of the main pulse at impact point in the material.

Hence, a first intense ultra-beam pulse induces a transient "plasma" optic in the vicinity of the focal region, which allows an exalted control (notably spatial) of the writing process. Indeed, under appropriate conditions, the plasma helps to relocate the writing laser flux (second synchronised pulse) to a spot size inaccessible by conventional focusing (e.g. by lens).

According to a first embodiment, the at least one laser pre-pulse and the main laser pulse are configured to be both focused at said given point.

According to a second embodiment:
- the main laser pulse is configured to be focused at said given point; and
- the at least one laser pre-pulse is configured to be focused at a zone that enables a pre-focal region of the material, induced by the at least one laser pre-pulse, to coincide with said given point.

The at least one laser pre-pulse and the main laser pulse may be composed from two different laser pulses. As an alternative, the at least one laser pre-pulse and the laser main-pulse are two components of one single, temporally shaped, laser signal. According to an embodiment, a single laser-emitting source is used for generating both the laser pre-pulse and the main laser pulse.

According to an embodiment, the method further comprises laser erasing by thermal process at least one laser inscription formed in the semiconductor material, the thermal process being carried out by laser irradiation of said at least one laser inscription configured with respect to a melting point of the semiconductor material.

Thus the invention makes it possible to provide not only a laser writing technique but also an erasing technique in the volume of semiconductors by a simple thermal stimulation. By applying appropriate laser irradiation, it is therefore possible to restore the original state of the material at the writing point to allow a new laser inscription (rewriting).

The thermal process belongs to the group comprising:
- irradiating said at least one laser inscription with a modulated continuous laser;
- irradiating said at least one laser inscription with apparently long pulses;
- irradiating said at least one laser inscription with a train of ultra-short laser pulses at high-repetition rate.

The new principles claimed thus lead to an exalted control (resolution and type of modifications) allowing to reproducibly induce structural defects (no dislocations or damages) whose density is adjustable until erasure (post-processing) and readable by all-optical methods. This capability is currently unattainable with conventional semiconductor laser writing configurations.

The approach also leads to control over the nature of the changes which allows for erasure by thermal post-processing. The post-processing can be done by laser with "long" interactions for local control.

According to an embodiment, said single laser-emitting source is also used for the laser erasing.

Therefore, the same laser source is used for writing, modifying (or reconfiguring) and erasing, thus both simplifying the optical assembly and reducing costs.

According to an exemplary embodiment, the semiconductor material is Silicon, and the laser conditions are as follows:
- the laser pre-pulse has level of light intensity of around 5×10¹² W/cm² at focus, a pulse width of around 190 fs, a pulse energy of around 500 nJ and a beam size of diameter around 5 microns;
- the laser main-pulse has a level of light intensity of around 2×10¹¹ W/cm² at focus, a pulse width of around 11 ps, a pulse energy of around 200 nJ and a beam size of diameter around 5 microns;
- the predetermined time is comprised between 20 ps and 200 ps.

In another embodiment, the invention pertains to a computer program product comprising program code instructions for implementing the above-mentioned method (in any of its different embodiments) when said program is executed on a computer or a processor.

In another embodiment, the invention pertains to a non-transitory computer-readable carrier medium, storing a program which, when executed by a computer or a processor causes the computer or the processor to carry out the above-mentioned method (in any of its different embodiments).

The invention also concerns a device for optical writing in a semiconductor material, the device comprising means configured for laser writing in volume of the semiconductor material. Such a device also comprises, means configured for irradiating the semiconductor material with at least one laser pre-pulse to change transiently and at least locally at least one property of the semiconductor material. A predetermined time elapses between activation of the irradiating means and laser writing means.

Advantageously, the device comprises means for implementing the steps performed in the writing method as described above, in any of its various embodiments.

### List of figures

Other features and advantages of embodiments of the invention shall appear from the following description, given by way of an indicative and non-exhaustive examples and from the appended drawings, of which:
- Figure 1 is a flowchart of a particular embodiment of the method according to the invention;
- Figure 2 represents a schematic illustration of the method of operation described with reference to figure 1;
- Figure 3 depicts a first example of signal implementing a laser double-pulse irradiation according to the invention;
- Figure 4 depicts a second example of signal implementing a laser double-pulse irradiation according to the invention;
- Figure 5 is an experimental image showing the influence of the laser pre-pulse on intensity distribution in a Silicon material before writing;
- Figure 6 shows the simplified structure of a writing device according to a particular embodiment of the invention;
- Figure 7 are infrared microscopy images showing writing performance obtained with the invention in comparison with prior art method;
- Figure 8 depicts a third example of signal implementing a laser multi-pulse irradiation according to the invention.

### Detailed description

In all the figures of the present document, identical elements and steps are designated by the same numerical reference sign.

The general principle of the invention consists in pre-conditioning the semiconductor material at the writing point by a laser pre-pulse before the main laser pulse. The laser pre-pulse is designed to transiently change at least one property of the material just before the main laser pulse to allow a hyper-localization of the main pulse at writing point, and therefore improving the optical writing performances in this kind of material.

### * Laser-processing writing

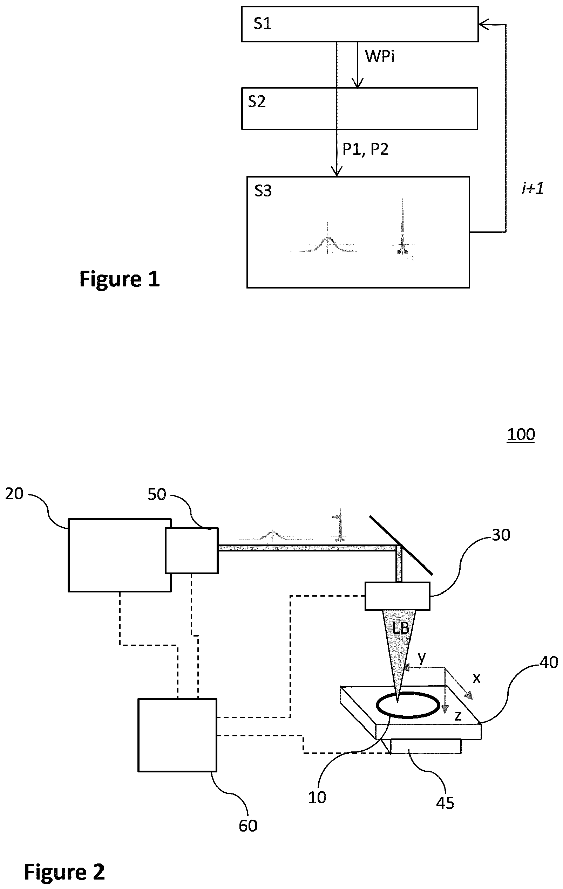

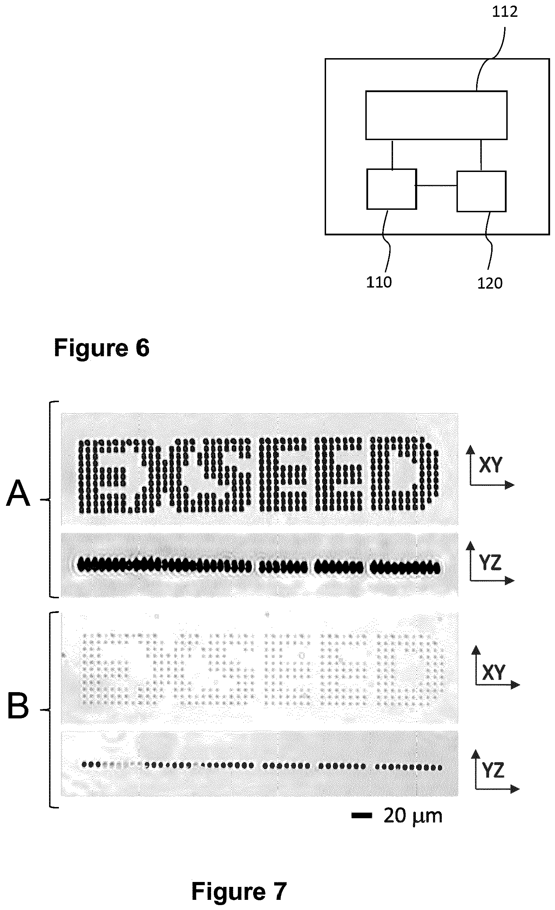

Referring now to **figure 1**, we present a laser writing method according to a particular embodiment of the invention. This method is carried out by a device (the principle of which is described in detail below in relation with figure 6). As illustrated in **figure 2**, it is considered here that the method is implemented in a laser-beam writing system 100 configured for writing a 3D pattern in a semiconductor material 10, such as a sample from a Silicon wafer. Silicon is defined by a refractive index of about 3.5 at the working wavelength of 1.5 µm.

The writing system is defined in a reference system 'X, Y, Z' to facilitate understanding. The 3D pattern is defined by a plurality of writing points to be unscripted within the Silicon sample 10.

Of course, other bandgap materials can be used for laser writing according to the invention and more particularly those belonging to the family of semiconductors or semiconductor alloys (like Germanium (Ge), Silicon carbide (SiC), Gallium nitride (GaN), Gallium phosphide (GaP), Gallium Arsenide (GaAs), Indium arsenide (InAs), Indium antimonide (InSb), Indium Phosphite (InP), Zinc Selinium (ZnSe), Zinc Sulfite (ZnS)).

The system 100 comprises the Silicon sample 10, a laser light source 20, an optical writing head 30, a sample holder 40, an external optical arrangement 50, means of displacement 45 and a processing unit 60.

### Silicon sample 10

Silicon sample 10 has a form of plate extending substantially along the X and Y axes, and a given thickness (significantly lower than the surface dimensions) extending along the Z axis. The Silicon sample 10 thus defines a possible volume of writing, namely both in surface (X and Y axes) and in depth (Z axis).

### Laser light source 20

Laser light source 20 is a pulsed laser source able to generate picosecond and femtosecond pulses (typically from few hundreds of picoseconds to few tens of femtoseconds) of wavelength comprised within the spectral band of transparency of the Silicon sample 10 (typically a wavelength superior to 1100 nm, like 1.5 µm for instance). In an embodiment, laser light source 20 may be a frequency tunable pulsed laser source.

### Writing head 30

Writing head 30 comprises beam formation means (not shown) configured to focus and/or shape the laser beam LB in volume (in depth) in the Silicon sample 10. Beam formation means may comprises a microscope objective and/or a converging lens for example.

### Sample holder 40 and displacement means 45

Sample holder 40 is a mechanically motorized plate cooperating with displacement means 45 for displacing the Silicon sample 10 relative to the laser beam LB. More particularly, displacement means 45 allow the positioning and the displacement of the Silicon sample 10 in the three directions of space along the X, Y, Z axes relative to the laser beam focus.

Alternatively, or in addition, the writing system 100 is equipped with mechanical motors (not shown) cooperating with the writing head 30 and forming relative displacement means for positioning and displacing the laser beam focus relative to the Silicon sample 10 in the three directions of space X, Y, Z. For example, the writing system 100 may be equipped with a galvo scanner (aka galvanometric scanner).

Alternatively, or in addition, the relative displacement means are optical, for example an additional optical device adapted to the displacement of the laser beam relative to the Silicon sample 10.

### External optical arrangement 50

External optical arrangement 50 is composed of a set of optical elements configured to control certain laser parameters, like beam geometry and polarization.

### Processing unit 60

Processing unit 60 is electrically connected both to the pulsed laser source 20, the external optical arrangement 50, the writing head 30 and the relative displacement means 45 for the purpose of driving these elements. Processing unit 60 is connected to the pulsed laser source 20 and the optical arrangement 50 for the control of laser parameters (e.g. light intensity, pulse width, beam geometry and polarization), to the writing head 30 for the control of geometric optical parameters (for example focalization position, etc.) and to the displacement means 45 for the control of relative displacements of the Silicon sample 10 and laser beam LB (for example spatial coordinates of the pattern, scanning speed, etc.). Driving of these elements is carried out based on program code instructions executed by the processing unit 60 in order to enable implementation of the method as described below.

Step **S1** consists in collecting laser writing parameters. Step S2 consists in positioning Silicon sample 10 relative to laser beam LB and Step S3 consists in forming a laser inscription in volume in Silicon sample 10 according to the principle of the invention.

At step **S1,** the device obtains, in one hand, the spatial coordinates (xi, yi, zi) of a writing point WPi to be marked into Silicon sample 10. Thus, for a first iteration of the method, the set of spatial coordinates is "x1, y1, z1" (i= 1).

The device also obtains in the other hand, information on characteristics of the material and the type of desired permanent change in Silicon sample 10 for performing laser writing. It is indeed possible to perform laser writing in semiconductors based on a change of property of the material which can be of different nature. For example, a laser inscription can be created in volume of semiconductor based on a permanent change of:
- optical properties as for instance the refractive index (real and imaginary part), the apparent birefringence or nonlinear susceptibility that can be exploited for integrated optics, photovoltaics and other photonics applications; and/or
- mechanical properties as for instance the tensile strength that can be exploited for instance for material welding or bonding applications and/or
- chemical sensitivity leading for instance to modifications exhibiting different etching rates for material micro/nano-structuring purposes and/or
- electrical and/or thermal conductivity including the ability to create thermoelectric materials

In the example described here, the information provided to the device are that:
- the sample is made of Silicon;
- the value representative of the change of refractive index to be induced by infra-red laser irradiation (referred as to "Δn") to form a permanent laser inscription in material.

The "Δn" index difference can be determined on the basis of a preliminary test or simulation conducted for defining an optimal value of "Δn" as a function of material characteristics. Value of "Δn" can be a value of real part and/or imaginary part of index.

Based on this information, the device sets laser parameters to make the laser inscription at writing point WPi: a first set of parameters P1 associated with the laser main pulse and a second set of parameters P2 associated with the laser pre-pulse. Typically, the first set of parameters P1 comprises data representative of: a level of light intensity I1 and a pulse width W1 leading to a permanent and local refractive index change of the material of Δn value. The second set of parameters P2 comprises data representative of: a level of light intensity I2 and a pulse width W2 leading to a transient and local refractive index change of the material.

The first and second set of parameters also comprise each data representative a value of focal distance to be taken into account by the writing head 30 for pre-pulse (referred as to F1) and main pulse (referred as to F2). To simplify things at first, the laser pre-pulse and the main laser pulse are considered to be both focused at the same writing point WPi (F1 = F2).

In addition, the device sets a predetermined time T (or time slot) intended to elapse between the laser pre-pulse and the main laser pulse. This predetermined time T is set as a function of the duration of the transient refractive index change induced by the pre-pulse in Silicon.

Once the sets of parameters are defined, the device is ready for driving the different elements of the system 100 with driving commands adapted for implementing the mechanism of laser double-irradiation according to the invention.

At step **S2**, the device triggers a displacement of the handle 40 relative to the optical axis of the laser system as a function of coordinates of writing point WPi until the Silicon sample 10 is in the requested position. Silicon sample 10 is ready to undergo the laser writing process.

At step **S3**, the device triggers a laser double-pulse on the basis of the laser writing parameters described above. Prior the laser writing itself (including a permanent change of the refractive index), an ultrashort and powerful laser pre-pulse is generated by the source 20 to irradiate Silicon sample 10 to pre-condition it before the main laser pulse. The laser pre-pulse is configured to cause a local and transient refractive index-change such that the material is in optimized conditions for writing. After that the predetermined time T is elapsed, the main laser pulse then irradiates Silicon sample 10 to form a (permanent) laser inscription at writing point WPi.

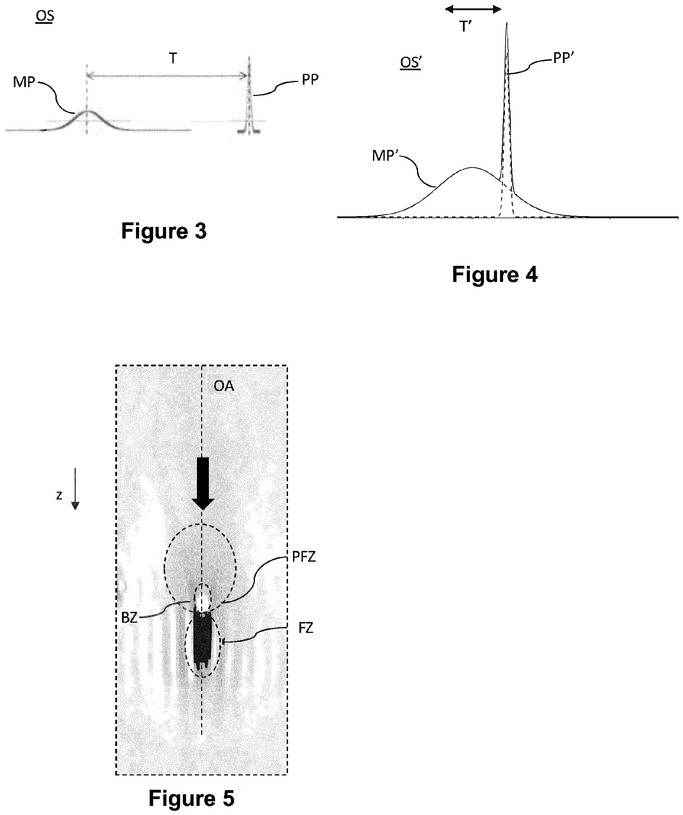

As shown in **figure 3****,** the laser pre-pulse PP and main laser pulse MP generated by the laser source 20 are formed from two distinct laser pulses. In this particular example applied to Silicon, the optical signal OS generated by the laser source 20 has the following features:
- laser pre-pulse PP has a level of light intensity I1, for example 5×10¹² W/cm² at focus (in vacuum), a pulse width of W1, for example 190 fs, pulse energy of around 500 nJ and beam size of diameter around 5 microns for conditions above threshold for plasma formation;
- laser main-pulse MP has a level of light intensity 12, for example 2×10¹¹ W/cm² at focus (in vacuum)) and a pulse W2 for example 11 ps, pulse energy of around 200 nJ and beam size of diameter around 5 microns for conditions above permanent modification threshold;
- laser pre-pulse PP and main-pulse MP are separated by the time T determined beforehand depending on the lifetime of transient permittivity change induced by the pre-pulse, for example 20 ps and more generally lower than 200 ps for a plasma effect in Silicon.

In this particular embodiment, laser pre-pulse PP and laser main-pulse MP are both generated by only one laser source. Alternatively, two distinct synchronized laser sources may be used, namely a first one intended for emitting laser pre-pulse PP and the other one for emitting laser main-pulse MP.

Alternatively, as shown in **figure 4****,** the laser pre-pulse and main laser pulse can be formed from one single temporally shaped laser signal OA' comprising both the equivalent of the laser pre-pulse PP' and main laser pulse MP'. The signal OA' is a laser signal modulated in time to provide a laser irradiation profile carrying out the search function by the invention. In accordance with the above principle, the laser pre-pulse PP' and main laser pulse MP' are apparently separated from each other from the predetermined duration T'.

But more broadly, the laser pre-pulse and main laser pulse shall be designed such that the laser pre-pulse has characteristics leading to conditions above threshold for inducing transient change (without permanent modification) and the main pulse characteristics are above threshold for permanent modification with the implemented conditions.

For the implemented case where the pre-pulse induces a plasma inside the material to induce the localization of the main pulse,
- the laser pre-pulse is of light intensity higher than the laser main-pulse (I1 > 12);
- the laser pre-pulse is of pulse width lower than said laser main-pulse (W1 < W2);
- the laser pre-pulse and main-pulse are separated by time T so that the second pulse interacts with the optimum transient change.

While the irradiation in the sample 10 by main laser pulse constitutes the step of laser writing itself (by laser-induced permanent material change), the role of the laser pre-pulse is to induce a localized transient change of the refractive index of the material in order to prepare the laser writing step. Indeed, as shown in **figure 5**, the inventors observed that irradiating by an ultra-short laser pre-pulse creates a spatially structured transient change of the refractive index (or permittivity) by plasma formation, especially in the pre-focal zone PFZ. This pre-focal zone PFZ precedes the focal point FZ on the optical path (OA). The dark regions in PFZ and FZ zones show the plasma created by the pre-pulse in Silicon. The bright zone BZ shows the highly localized processing region in the pre-focal zone (PFZ). This transient refractive index change offsets the focalization phenomena subsequently induced by the main pulse when interacting with the semiconductor. The inventors observed that this transient pre-conditioning plasma improves the precision of writing. Indeed, figure 4 demonstrates that irradiating the material with a laser writing pulse through such a transient plasma allows an hyperfocalization of the writing pulse in the material, improving accuracy of writing.

In this respect, rather than to use the same focalization parameter for both pre-pulse and main laser pulse (parameters used F1 = F2), the inventors observed that the fact of the main pulse is focused in the pre-focal zone (PFZ) of the pre-pulse can further enhance writing quality in the material. Therefore, according to this particularly advantageous embodiment, the main laser pulse MP being intended to be focused at writing point WPi, laser pre-pulse PP is configured to be focused in a (post-focal) zone so that the pre-focal region of pre-pulse coincides with writing point WPI.

It should be noted that transiently changing the refractive index can be achieved by different manners, such as by plasma effect, Kerr effect or thermal effect for example, as a function of the type of material used for writing and laser writing parameters.

After laser irradiation, Silicon sample 10 is marked from a permanent laser inscription at writing point WPi. Typically, as shown in figure 7, laser inscriptions of about 1 µm³ have been obtained using the above parameters.

The algorithm is then reiterated (i+1) and goes back to step S1 for taking into account another writing point among the plurality of points of the 3D pattern set beforehand.

In an optimized implementation, laser continuous writing along trajectories of the predefined 3D pattern can be also carried out (by focal point translation in at least one of three directions of space) without departing from the scope of the invention.

Optical writing shall mean within the meaning of the invention not only the process of permanent inscription in a material but also the process of erasure of such a permanent inscription.

### * Laser-processing erasure

Indeed, according to another aspect of the invention, the method provides for the possibility of erasing one or more laser inscriptions contained in volume of semiconductors, like the Silicon sample of example. The erasure process according to the invention relies on a thermal process of the laser inscription to be removed taking into account the melting point of the semiconductor used as support for laser writing.

According to a **first** exemplary embodiment, the thermal process comprises irradiating the laser inscription using a train of ultra-short laser pulses (duration typically less than 10 ps) at high-repetition rate, such a train of pulses being configured to produce by energy accumulation (pulse-to-pulse) an apparently long thermal stimulation (typically greater than 1 ns) to the laser inscription. Typically, a train of 3 × 10⁴ pulses at a repetition rate upper than 300kHz and preferentially in the range comprised between 1MHz and 10THz, showed positive results in silicon.

According to a **second** exemplary embodiment, the thermal process comprises irradiating the laser inscription using an apparently long laser pulse of duration greater than lOps and preferentially greater than 1 ns to induce a thermal stimulation to the laser inscription. In a particular implementation a pulse duration of 3.5 ns showed positive results. The laser parameters are set with respect to the melting threshold (1414°C for Silicon) for a softening of the lattice and subsequent relaxation (or suppression by recrystallization) of the crystalline defects that constitutes the laser modifications in semiconductor.

According to a **third** exemplary embodiment, the thermal process comprises irradiating the laser inscription using a modulated continuous laser configured with respect to the melting threshold of the semiconductor.

In order to simplify the optical writing system and reduce costs, the thermal process and irradiation steps can be performed using one single laser source (e.g. the source 20). In other words, the same laser source can be used for writing, modifying (or reconfiguring) and erasing. Of course, allocating two different laser sources to each of both steps could be also envisaged without departing from the scope of the invention.

Furthermore, in case that all laser inscriptions of a sample are to be erased, the thermal process may consist in treating thermally the semiconductor sample as whole, for instance by heating.

**Figure 6** shows the simplified structure of a writing device according to a particular embodiment of the invention. The writing device comprises a non-volatile memory 110 (e.g. a read-only memory (ROM) or a hard disk), a volatile memory 111 (e.g. a random-access memory or RAM) and a processor 112. The non-volatile memory 110 is a non-transitory computer-readable carrier medium. It stores executable program code instructions, which are executed by the processor 112 in order to enable implementation of the described method, and for example the steps S1-S2.

Upon initialization, the aforementioned program code instructions are transferred from the non-volatile memory 110 to the volatile memory 111 so as to be executed by the processor 112. The volatile memory 111 likewise includes registers for storing the variables and parameters required for this execution.

All the steps of the above writing method can be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

**Figure 7** are infrared microscopy images showing writing performance obtained with the invention (B frame) in comparison with prior art method (A frame). One can see that the laser inscriptions obtained by implementation of the described method (B frame) are of much better quality than it is obtained by known method (A frame). The inventors observed that laser inscriptions of around 1 µm³ (1µm x 1µm x 1µm) can be marked in Silicon wafer, thereby providing an enhanced resolution writing method. They also observed the produced modifications by the described method (B frame) can be erased by the means described above, an aspect that was not accessible by known method (A frame).

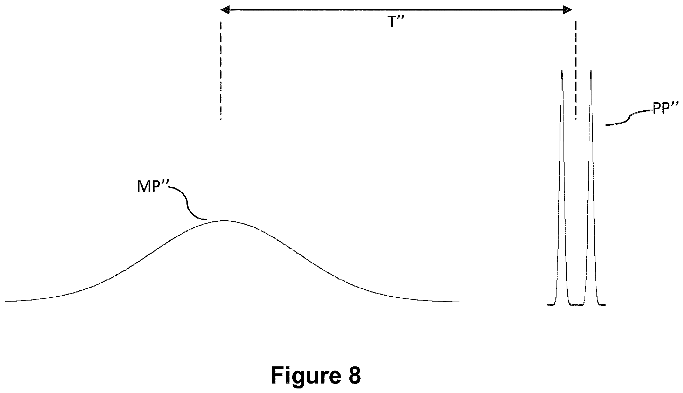

**Figure 8** exemplifies a particular implementation of the claimed method with more than two pulses. An equivalent pre-pulse PP" consists in two short intense pulses allowing to create by accumulation an appropriate transient index change (for instance by carrier accumulation by two ionizing pulses for a plasma effect) for the main writing pulse MP". The laser pre-pulse PP" and main laser pulse MP" are separated from each other by the predetermined duration T".

As a conclusion, the claimed invention relates to a laser methodology for writing, correcting and erasing changes in three-dimensional space within semiconductors. It allows to reach a level of precision (micrometric) and flexibility (arbitrary 3D) without technological alternative. Potential applications have been identified in the microelectronics industry.

The inventors have unambiguously demonstrated the writing of modified "voxels" of micrometer size (i.e. 1 micron x 1 micron x 1 micron). For comparison, the best technological results in the literature known to date on silicon hardly reach resolutions of a few microns in lateral resolution and about 10 microns in axial resolution (i.e. about 5 microns x 5 microns x 10 microns).

The claimed method offers an unmatched flexibility with application perspectives from optical memories for silicon photonics to the fabrication of MEMS structures with complex architectures.

## Claims

1. Method for optical writing in a semiconductor material (10), the method comprising laser writing in volume of the semiconductor material, and being **characterized in that** it comprises, prior to said laser writing, irradiating the semiconductor material with at least one laser pre-pulse configured to change transiently and at least locally at least one property of the semiconductor material, and **in that** a predetermined time elapses between the laser pre-pulse and laser writing.

2. Method according to claim 1, wherein
- said laser writing comprises irradiating said material by means of a main laser pulse to form a laser inscription at a given point in volume of the semiconductor material;
- the at least one laser pre-pulse and the main laser pulse are configured such that:
* the at least one laser pre-pulse is of light intensity higher than the main laser pulse;
* the at least one laser pre-pulse is of pulse width lower than the main laser pulse
* the at least one laser pre-pulse and the main laser pulse are separated by said predetermined time.

3. Method according to claim 2, wherein the at least one laser pre-pulse and the main laser pulse are configured to be both focused at said given point.

4. Method according to claim 2, wherein:
- the main laser pulse is configured to be focused at said given point; and
- the at least one laser pre-pulse is configured to be focused at a zone that enables a pre-focal region of the material, induced by the at least one laser pre-pulse, to coincide with said given point.

5. Method according to any one of claims 2 to 4, wherein the at least one laser pre-pulse and the main laser pulse are composed from two different laser pulses.

6. Method according to any one of claims 2 to 4, wherein the at least one laser pre-pulse and the laser main-pulse are two components of one single, temporally shaped, laser signal.

7. Method according to any one of claims 2 to 6, wherein a single laser-emitting source is used for generating both the laser pre-pulse and the main laser pulse.

8. Method according to any one of claims 1 to 7, wherein it comprises laser erasing by thermal process at least one laser inscription formed in the semiconductor material, the thermal process being carried out by laser irradiation of said at least one laser inscription configured with respect to a melting point of the semiconductor material.

9. Method according to claim 8, wherein said single laser-emitting source is also used for the laser erasing.

10. Method according to any one of claims 1 to 9, wherein the semiconductor material is Silicon.

11. Method according to any one of claims 2 to 10, wherein:
- the laser pre-pulse has level of light intensity of around 5×10¹² W/cm² at focus, a pulse width of around 190 fs, a pulse energy of around 500 nJ and a beam size of diameter around 5 microns;
- the laser main-pulse has a level of light intensity of around 2×10¹¹ W/cm² at focus, a pulse width of around 11 ps, a pulse energy of around 200 nJ and a beam size of diameter around 5 microns;
- the predetermined time is comprised between 20 ps and 200 ps.

12. Method according to any one of claims 1 to 11, wherein said at least one property of the semiconductor material belongs to the group comprising: refractive index, birefringence, nonlinear susceptibility, luminescence, mechanical strength, chemical etching rate, electrical and/or thermal conductivity.

13. Computer program product **characterized in that** it comprises program code instructions for implementing the method according to at least one of claims 1 to 12, when said program is executed by a processor.

14. A non-transitory computer-readable carrier medium storing a computer program product according to claim 13.

15. Device for optical writing in a semiconductor material (10), the device comprising means configured for laser writing in volume of the semiconductor material, and being **characterized in that** it comprises, means configured for irradiating the semiconductor material with a at least one laser pre-pulse to change transiently and at least locally at least one property of the semiconductor material, and **in that** a predetermined time elapses between activation of the irradiating means and laser writing means.
